# FASCICULE DE BREVET EUROPEEN

(11) **EP 0 957 210 B1**
(45) Date de publication et mention de la délivrance du brevet: **11.07.2007**
(21) Numéro de dépôt: 99401139.3
(22) Date de dépôt: 10.05.1999
(51) Int. Cl.: E02F 9/12

(54) **Circuit de fluide hydraulique ayant un moteur hydraulique et un sélecteur à trois positions pour sélectionner la circulation de fluide**
Hydraulikölkreislauf mit einem Hydraulikmotor und einem Drei-Stellungs-Wegeventil
Hydraulic circuit with hydraulic motor and a three-position-valve

(30) Priorité: 13.05.1998 FR 9806020
(43) Date de publication de la demande: 17.11.1999
(73) Titulaire: POCLAIN HYDRAULICS INDUSTRIE, 60411 Verberie (FR)
(72) Inventeur: Mangano, Alain, 60350 Vieux Moulin (FR); Allart, Bernard, 60800 Crepy-en-Valois (FR); Bigo, Louis, 60200 Compiegne (FR); Garczarek, Michel, 60300 Borest (FR); Ethet, Yannick, décédé (FR); Crave, Joel, 60190 Remy (FR); Peignon, Philippe, 95130 Franconville (FR)
(74) Mandataire: Intes, Didier Gérard André

(56) Documents cités:
- EP-A- 0 284 956
- US-A- 4 615 174
- US-A- 5 709 083
- PATENT ABSTRACTS OF JAPAN vol. 005, no. 006 (M-050), 16 janvier 1981 & JP 55 139505 A (HITACHI CONSTR MACH CO LTD), 31 octobre 1980
- PATENT ABSTRACTS OF JAPAN vol. 008, no. 154 (M-310), 18 juillet 1984 & JP 59 052028 A (KOMATSU SEISAKUSHO KK), 26 mars 1984

## Description

La présente invention concerne un circuit de fluide hydraulique comprenant :
- un moteur hydraulique réversible comportant un stator et un rotor, notamment du type utilisé pour entraîner les organes de déplacement en translation d'un engin, ledit moteur ayant deux orifices principaux respectivement destinés à servir à l'alimentation et à l'échappement de fluide,
- un dispositif d'immobilisation du rotor du moteur qui comprend au moins un organe d'immobilisation et des moyens pour solliciter ledit organe dans une position active dans laquelle le rotor est immobilisé et dans une position inactive dans laquelle le rotor est libre de tourner par rapport au stator,
- des moyens de mise en circulation de fluide hydraulique,
- deux conduites principales, respectivement destinées à être reliées à chacun des deux orifices principaux du moteur pour servir de conduites d'alimentation et d'échappement pour le moteur en situation de fonctionnement de ce dernier,
- un dispositif de sélection de la circulation du fluide entre les orifices principaux du moteur et les conduites principales auxquelles ils sont respectivement raccordés, ce dispositif comprenant un sélecteur principal susceptible d'occuper une position de repos dans laquelle, les pressions de fluide dans les conduites principales étant sensiblement égales, la circulation de fluide entre les conduites principales et les orifices principaux correspondants est empêchée dans le sens de l'échappement, une première position active dans laquelle, la pression de fluide dans la première conduite principale étant supérieure à la pression de fluide dans la deuxième conduite principale, la circulation de fluide entre la première conduite principale et le premier orifice principal est autorisée dans le sens de l'alimentation tandis que la circulation de fluide entre la deuxième conduite principale et le deuxième orifice principal est autorisée dans le sens de l'échappement et une deuxième position active dans laquelle, la pression de fluide dans la première conduite principale étant inférieure à la pression de fluide dans la deuxième conduite principale, la circulation de fluide entre la première conduite principale et le premier orifice principal est autorisée dans le sens de l'échappement tandis que la circulation de fluide entre la deuxième conduite principale et le deuxième orifice principal est autorisée dans le sens de l'alimentation, le dispositif de sélection comprenant, en outre, des moyens pour commander le déplacement du sélecteur principal entre ses trois positions. Un tel circuit de fluide hydraulique est connu de US-A-4615174.

Le moteur hydraulique peut être du type à carter tournant ou à arbre tournant. Il a deux sens de rotation, c'est-à-dire que, selon l'orifice principal que l'on choisit pour l'alimentation et celui que l'on choisit pour l'échappement, le rotor peut tourner par rapport au stator dans les deux sens de rotation opposés. Par ailleurs, le moteur est réversible et, dans l'un de ses sens de rotation, il est susceptible de fonctionner en pompe, par exemple lorsque le véhicule circule en descente. Il peut s'agir d'un moteur lent (à basse vitesse et à fort couple) ou d'un moteur rapide. Le moteur utilisé dans un tel circuit est destiné à assurer l'entraînement des organes de déplacement en translation (par exemple des chenilles) d'engins tels que des pelles hydrauliques.

Les moyens de mise en circulation de fluide hydraulique comprennent classiquement une ou plusieurs pompes. Le circuit peut être un circuit ouvert, dans lequel une pompe à une seule sortie est utilisée pour alimenter la conduite principale qui sert à l'alimentation, tandis que la conduite qui sert à l'échappement est raccordée à un réservoir sans pression. Il peut également s'agir d'un circuit fermé, dans lequel on utilise une pompe ayant une sortie de fluide à haute pression pour alimenter la conduite d'alimentation et une entrée de fluide à basse pression raccordée à la conduite d'échappement.

La pompe peut être à cylindrée fixe ou variable. Elle peut avoir deux sens de rotation pour sélectivement alimenter l'une ou l'autre des conduites principales. Elle peut également avoir un seul sens de rotation, auquel cas un sélecteur du raccordement de l'une ou de l'autre des conduites principales à la sortie de la pompe est utilisé. En outre, le circuit peut comprendre une pompe de gavage qui permet, lorsque le moteur est arrêté, de maintenir une pression dite de gavage dans l'ensemble des conduites du circuit et, lors du fonctionnement du moteur, de maintenir les conduits reliés à l'échappement à la pression de gavage.

Dans la position de repos du sélecteur principal du dispositif de sélection de la circulation du fluide entre les orifices principaux du moteur et les conduites principales auxquels ils sont respectivement raccordés, la circulation du fluide est empêchée dans le sens de l'échappement à partir des deux orifices principaux du moteur, de sorte que celui-ci ne peut pas fonctionner. Le sélecteur principal est automatiquement placé dans sa position de repos lorsque les pressions de fluide dans les conduites principales sont sensiblement égales. En revanche, lorsque le sélecteur principal occupe une de ses deux positions actives, le moteur peut fonctionner dans l'un ou l'autre de ses deux sens de rotation.

Le dispositif d'immobilisation du rotor du moteur est généralement utilisé comme frein de parking, qui sert à maintenir le moteur à l'arrêt lorsque l'alimentation et l'échappement dans les conduites principales cessent. En particulier, à l'arrêt; les pressions dans les conduites principales sont sensiblement égales et le sélecteur principal occupe sa position de repos, tandis que l'organe d'immobilisation occupe sa position active. Bien entendu, il est nécessaire que cet organe d'immobilisation occupe sa position inactive pour que le moteur fonctionne dans de bonnes conditions.

Avec certains moteurs anciens, il était prévu d'actionner séparément le dispositif d'immobilisation pour placer l'organe d'immobilisation dans sa position inactive et de mettre le moteur en marche en générant respectivement une alimentation et un échappement de fluide dans chacune des deux conduites principales.

Pour éviter de mauvaises manipulations, on a ensuite pensé à automatiser la commande de désactivation du frein. Ainsi, dans certains circuits, l'organe d'immobilisation est automatiquement sollicité de sa position active vers sa position inactive lorsque commence la circulation de fluide alimentant l'une des conduites principales et permettant l'échappement dans l'autre conduite.

La demanderesse s'est aperçue que ce système n'était pas tout à fait satisfaisant. En effet, avec un tel système, l'organe d'immobilisation est sollicité vers sa position inactive en même temps que la conduite d'alimentation du moteur est mise en pression et que la conduite d'échappement est reliée à l'échappement, de sorte que le rotor exerce déjà un couple. Le fait d'inactiver l'organe d'immobilisation dans ces conditions peut constituer une cause d'usure prématurée de certains éléments du moteur, en particulier de cet organe d'immobilisation. Par ailleurs, il en résulte un risque d'à-coups désagréables lors du démarrage du moteur.

L'invention vise à remédier à ces inconvénients en proposant un circuit qui, tout en permettant un passage automatique de l'organe d'immobilisation dans sa position inactive lors du démarrage du moteur, fasse en sorte que les orifices principaux du moteur ne soient effectivement raccordés aux conduites d'alimentation et d'échappement qu'après que l'organe d'immobilisation a été sollicité vers sa position inactive.

Ce but est atteint grâce au fait que les moyens pour commander le déplacement du sélecteur principal comprennent un système intermédiaire de sélection susceptible d'adopter une première configuration dans laquelle le sélecteur principal est maintenu dans sa position de repos et une deuxième configuration dans laquelle le sélecteur principal est autorisé à quitter sa position de repos pour adopter l'une ou l'autre de ses positions actives, ainsi que deux conduites de pilotage susceptibles d'être mises à la même pression ou à des pressions différentes par l'intermédiaire du système intermédiaire de sélection, les moyens pour commander le déplacement du sélecteur principal comportant, en outre, des moyens de commande du système intermédiaire de sélection qui sont raccordés au dispositif d'immobilisation de telle sorte que ledit système intermédiaire de sélection n'est autorisé à passer de sa première à sa deuxième configuration qu'une fois que l'organe d'immobilisation a été sollicité vers sa position inactive.

Le système intermédiaire de sélection joue en fait le rôle d'une valve de séquence qui permet, lors de la mise en circulation du fluide pour démarrer le moteur, de réaliser la séquence suivante : premièrement, sollicitation de l'organe d'immobilisation vers sa position inactive et, deuxièmement, alimentation et échappement effectifs pour le moteur. En effet, lorsque le fluide est mis en circulation dans le circuit après un arrêt et un freinage du moteur, le sélecteur principal occupant sa position de repos et le système intermédiaire de sélection étant dans sa première configuration, il est nécessaire que l'organe d'immobilisation passe vers sa position inactive pour que le système intermédiaire de sélection puisse passer dans sa deuxième configuration, ce qui permet ensuite au sélecteur principal de quitter sa position de repos pour permettre effectivement la circulation du fluide à travers les conduits d'alimentation et d'échappement du moteur.

Pour réaliser le système intermédiaire de sélection, plusieurs variantes avantageuses sont envisagées. Elles seront décrites dans la suite en référence aux dessins annexés.

Avantageusement, les moyens de commande du système intermédiaire de sélection comprennent au moins une conduite de commande susceptible d'être alimentée en fluide pour solliciter le système intermédiaire de sélection de sa première configuration dans sa deuxième configuration. Lorsque les moyens pour solliciter l'organe d'immobilisation dans sa position inactive comprennent un vérin de désactivation susceptible d'être alimenté en fluide par une conduite de désactivation, il est avantageux de prévoir que cette conduite de commande soit alimentée en fluide par la conduite de désactivation.

Grâce à ces dispositions, lorsque le dispositif d'immobilisation est commandé hydrauliquement, on utilise la même ligne de commande hydraulique pour commander le système intermédiaire de sélection vers sa deuxième configuration, ce qui permet d'éviter que ce système intermédiaire de sélection ne soit commandé vers sa deuxième configuration indépendamment du passage de l'organe d'immobilisation vers sa position inactive.

En variante, les moyens de commande du système intermédiaire de sélection comprennent avantageusement au moins un organe de commande, lié mécaniquement à l'organe d'immobilisation et susceptible d'être actionné par ledit organe d'immobilisation pour solliciter le système intermédiaire de sélection de sa première configuration dans sa deuxième configuration.

Dans ce cas, le passage du système intermédiaire de sélection vers sa deuxième configuration est lié mécaniquement à la désactivation de l'organe d'immobilisation.

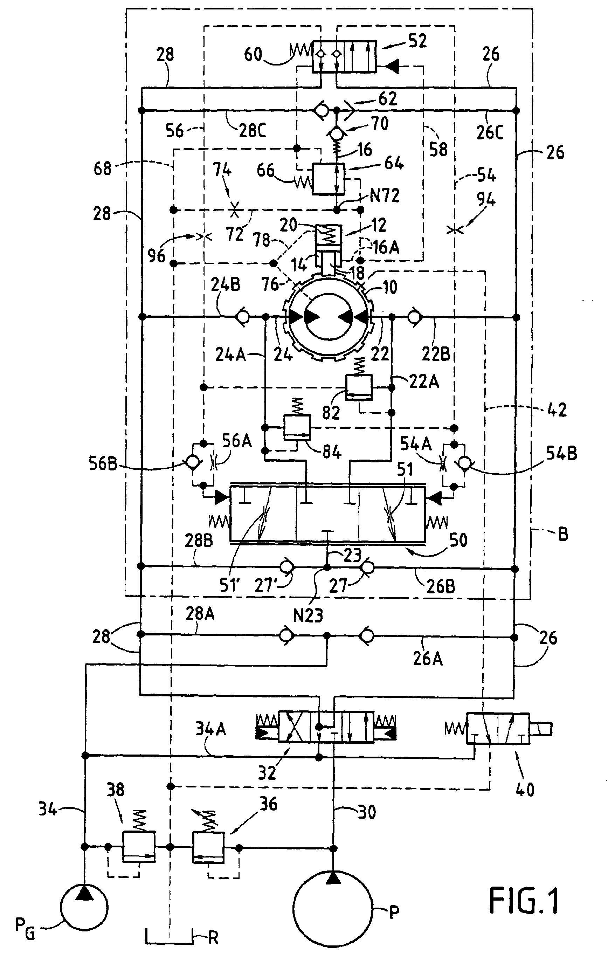

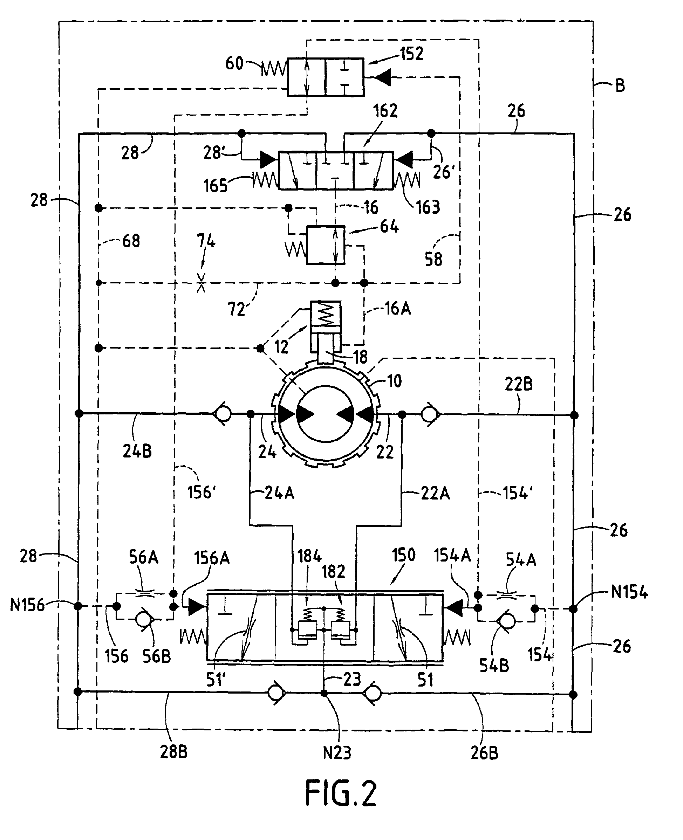

L'invention sera bien comprise et ses avantages apparaîtront mieux à la description détaillée des dessins annexés, sur lesquels la figure 1 montre un circuit conforme à l'invention selon une première variante de réalisation, tandis que les figures 2 à 5 montrent une deuxième, une troisième, une quatrième et une cinquième variante d'une partie du circuit de la figure 1.

Le moteur hydraulique 10 représenté sur les figures à titre d'exemple comporte deux cylindrées distinctes de fonctionnement. Toutefois, pour la clarté des dessins, on n'a pas représenté les moyens de sélection de la cylindrée de ce moteur. Il doit toutefois être entendu que, si le moteur a deux cylindrées, de tels moyens sont présents, par exemple sous la forme d'un tiroir de sélection de la cylindrée du moteur, par exemple du type de celui que montre le brevet français n° 2 699 229. Bien entendu, l'invention peut également s'appliquer à d'autres types de moteurs hydrauliques, à une ou plusieurs cylindrées.

Le dispositif d'immobilisation 12 représenté schématiquement sur la figure 1 est un système à crabot. L'invention s'applique également à des moteurs ayant d'autres systèmes de frein, par exemple des freins à lamelles ou à disques tels que celui que présente le brevet français n° 2 655 091, ou des freins à dents axiales tels que celui que présente le brevet français n° 2 644 210.

Classiquement, ces freins comportent au moins un premier organe de freinage (par exemple une première série de dents ou une première série de lamelles ou de disques) solidaire en rotation du rotor et un deuxième organe de freinage (une deuxième série de dents ou une deuxième série de lamelles ou de disques) solidaire en rotation avec le stator. L'organe d'immobilisation peut quant à lui être constitué par un piston qui, dans sa position active, sollicite les organes de freinage pour que ces derniers coopèrent entre eux de manière à freiner le rotor par rapport au stator et qui, dans sa position inactive, cesse de solliciter ces organes de freinage en coopération de freinage, de sorte qu'ils peuvent tourner les uns par rapport aux autres. Le dispositif d'immobilisation représenté schématiquement sur la figure 1 comporte ainsi un vérin de désactivation dont une chambre de désactivation 14 est susceptible d'être alimentée en fluide par une conduite de désactivation 16 pour solliciter l'organe d'immobilisation constitué par un piston 18 vers sa position inactive, à l'encontre de l'action de moyens de rappel tels qu'un ressort 20.

Le moteur 10 comporte deux orifices principaux, respectivement 22 et 24, qui sont destinés à servir, l'un à l'alimentation de fluide, l'autre à l'échappement de fluide.

Le circuit comporte deux conduites principales, respectivement 26 et 28, qui sont respectivement destinées à être reliées à chacun des deux orifices principaux 22 et 24 pour jouer le rôle de conduites d'alimentation ou celui de conduites d'échappement.

Les moyens de mise en circulation de fluide hydraulique représentés sur la figure 1 comprennent une pompe principale P dont la conduite de sortie 30 est reliée à un sélecteur 32 auquel sont également reliées les conduites 26 et 28. Les moyens de mise en circulation du fluide comprennent également un réservoir sans pression R qui permet le retour de fluide. Dans l'exemple représenté, le circuit comporte encore une pompe de gavage P_{G}, qui est capable d'alimenter en fluide une conduite de gavage 34 pour générer une pression de gavage de l'ordre de quelques bars, par exemple 2 à 10 bars.

Pour éviter les surpressions dans le circuit, la conduite 30 est reliée au réservoir R par une soupape réglable 36. La conduite de gavage 34 est également reliée au réservoir R par une soupape 38 réglée pour la pression de gavage. La conduite de gavage 34 est reliée aux conduites principales 26 et 28 par des conduites secondaires, respectivement 26A et 28A qui sont équipées de clapets permettant le passage du fluide seulement dans le sens allant de la conduite de gavage vers les conduites principales. Cette disposition permet de maintenir en permanence dans les conduites principales une pression au moins égale à la pression de gavage.

A l'arrêt du moteur, le sélecteur 32 occupe sa position intermédiaire dans laquelle les conduites principales sont mises en communication et sont toutes deux reliées à la conduite de gavage 34 par une conduite secondaire 34A. Ainsi, à l'arrêt, les deux conduites principales sont mises à la pression de gavage. En revanche, lorsque le sélecteur 32 est déplacé vers la gauche sur la figure 1, la conduite 26 est reliée à la conduite 30 de sortie de la haute pression de la pompe P et elle sert à l'alimentation, tandis que la conduite 28 est isolée de la conduite 26 et est raccordée à la conduite secondaire 34A, ce qui permet l'échappement du fluide vers le réservoir R à travers la soupape 38. Lorsque le sélecteur 32 est déplacé vers la droite sur la figure 1, la situation est inversée, la conduite 28 servant à l'alimentation, tandis que la conduite 26 sert à l'échappement. Le circuit de gavage peut également servir à commander les fonctions secondaires du moteur. Ainsi, le circuit représenté à titre d'exemple sur la figure 1 comporte une électrovanne 40 qui sert à la commande du système de sélection de la cylindrée du moteur par une conduite de commande de sélection de la cylindrée 42 qui, selon la position de l'électrovanne 40, peut être reliée au réservoir R ou à la conduite secondaire de gavage 34A.

Sur la figure 1, on a délimité en trait mixte interrompu, un bloc B qui comprend le moteur et les différents éléments du circuit (valves, clapets, sélecteurs ...) qui sont avantageusement intégrés dans le carter du moteur. Ainsi, le bloc B comprend le sélecteur principal 50 du dispositif de sélection de la circulation du fluide entre les orifices principaux du moteur et les conduites principales 26 et 28. Ces dernières sont raccordées au sélecteur 50 par des conduites secondaires, respectivement 26B et 28B qui sont équipées de clapets anti-retour 27, 27' permettant seulement la circulation du fluide dans le sens allant du sélecteur principal vers les conduites 26 ou 28. Plus précisément, les conduites 26B et 28B sont reliées à une conduite 23 en un noeud N23 situé entre les clapets 27 et 27', et c'est cette conduite 23 qui est reliée à la sortie du sélecteur 50.

Les orifices principaux du moteur sont reliés au sélecteur principal par des conduites de dérivation, respectivement 22A et 24A. En outre, l'orifice principal 22 est relié à la conduite 26 par une conduite de raccordement 22B qui est équipée d'un clapet anti-retour permettant seulement la circulation du fluide dans le sens de l'alimentation de l'orifice 22. De même, l'orifice 24 est raccordé à la conduite principale 28 par une conduite de raccordement 24B équipée d'un clapet anti-retour permettant seulement la circulation des fluides dans le sens de l'alimentation de l'orifice 24.

Le sélecteur principal 50 peut occuper trois positions particulières, à savoir une position intermédiaire de repos et deux positions extrêmes actives.

Dans la position de repos, représentée sur la figure 1, les deux conduites 22A et 24A sont isolées et ne sont reliées à aucune autre conduite par le sélecteur principal. De même, la branche 23 est isolée dans le sélecteur principal. Ainsi, le rotor du moteur ne peut pas tourner puisque, pour les deux orifices principaux 22 et 24 du moteur, la circulation est seulement possible dans le sens de l'alimentation, mais aucun de ces orifices ne peut servir à l'échappement de fluide.

En revanche, lorsque le sélecteur 50 occupe sa première position active, dans laquelle il est déplacé vers la gauche sur la figure 1, la première conduite principale 26 peut servir à l'alimentation du premier orifice principal 22 du moteur, par la conduite de raccordement 22B, tandis que la conduite de dérivation 24A est raccordée à la deuxième conduite principale 28 par la conduite secondaire 28B, ce qui permet l'échappement de fluide par le deuxième orifice principal 24 du moteur.

La situation est inverse dans la deuxième position active du sélecteur principal 50, dans laquelle il est déplacé vers la droite sur la figure 1.

Pour commander le déplacement du sélecteur principal 50, un système intermédiaire de sélection est intégré dans le bloc B. Sur la figure 1, ce système intermédiaire comporte le sélecteur intermédiaire 52 à deux positions. Les moyens pour commander le déplacement du sélecteur principal 50 comportent également deux conduites de pilotage 54 et 56 qui peuvent être sélectivement mises en communication respectivement avec les deux conduites principales 26 et 28 pour solliciter le sélecteur principal vers l'une ou l'autre de ses positions actives.

Lorsque le système intermédiaire de sélection occupe une première configuration dans laquelle les deux conduites de pilotage sont mises à la même pression, le sélecteur principal occupe sa position de repos.

En revanche, lorsque le système intermédiaire de sélection est dans une deuxième configuration dans laquelle la première conduite de pilotage 54 est mise en communication avec la première conduite principale 26 mise à la haute pression, tandis que la deuxième conduite de pilotage 56 est mise en communication avec la deuxième conduite principale 28 qui est mise à la basse pression, le sélecteur principal 50 peut occuper sa première position active.

Inversement, toujours dans sa deuxième configuration, le système intermédiaire de sélection peut permettre que la deuxième conduite de pilotage 56 soit reliée à la deuxième conduite principale 28 à la haute pression et que la première conduite de pilotage soit mise en communication avec la première conduite principale 26 qui est à la basse pression, de telle sorte que le sélecteur principal 50 peut occuper sa deuxième position active.

Le sélecteur 50 est rappelé à l'encontre de l'alimentation dans les conduites de pilotage 54 et 56 par des moyens de rappel tels que des ressorts. On remarque que, pour éviter un passage trop rapide du sélecteur 50 de sa position de repos vers l'une ou l'autre de ses positions actives, le débit de fluide dans les conduites de pilotage est limité dans le sens de l'alimentation par des restrictions 54A et 56A. En revanche, lors du passage du sélecteur principal de l'une de ses positions actives vers sa position de repos, la circulation de fluide dans les conduites de pilotage dans le sens de l'évacuation se fait à travers les clapets anti-retour 54B et 56B. Il faut noter que l'on pourrait adopter une solution inverse, en gérant la vitesse de déplacement du sélecteur par des restrictions actives sur la vidange des conduites de pilotage et en inversant les clapets anti-retour 54B et 56B pour qu'ils permettent la circulation de fluide dans le sens de l'alimentation des conduites de pilotage.

Le système intermédiaire de sélection est lui-même commandé entre ses deux configurations par les moyens de commande comprenant par exemple une conduite de commande 58 qui, lorsqu'elle est alimentée en fluide, sollicite le système intermédiaire de sélection de sa première configuration vers sa deuxième configuration, alors qu'il est rappelé dans sa première configuration par le ressort 60 d'effet antagoniste à la pression de fluide dans la conduite 58.

Sur la figure 1, le sélecteur intermédiaire 52 est disposé entre les conduites principales 26 et 28 et les conduites de pilotage 54 et 56. Ce sélecteur 52 est représenté dans sa première position (c'est-à-dire que le système intermédiaire de sélection est dans sa première configuration) ; la première conduite de ,pilotage 54 est raccordée à la première conduite principale 26 par l'intermédiaire d'un clapet anti-retour, dont est muni le sélecteur 52 et qui empêche la circulation dans le sens de l'alimentation en fluide de la conduite de pilotage 54. De même, la conduite 56 est raccordée à la conduite principale 28 par l'intermédiaire d'un clapet anti-retour qui empêche la circulation de fluide dans le sens de l'alimentation de la conduite 56.

On pourrait également prévoir que les conduites de pilotage 54 et 56 soient totalement isolées des conduites principales 26 et 28 dans la première position du sélecteur 52. Toutefois, la circulation de fluide seulement dans le sens de l'évacuation des conduites de pilotage rendue possible dans le mode de réalisation de la figure 1 permet de faire en sorte que, lorsque le moteur est arrêté et que les deux conduites principales sont mises à la même pression de gavage, celle des conduites de pilotage dans laquelle la pression était la plus forte puisse se "vider" dans la conduite principale à laquelle elle est raccordée dans la première position du sélecteur 52 jusqu'à ce que la pression dans cette conduite de pilotage soit égale à la pression de gavage. On obtient ainsi un meilleur équilibrage des pressions dans les deux conduites de pilotage et un passage rapide du sélecteur intermédiaire de la position active qu'il occupait à sa position de repos (la conduite principale 26 ou 28 qui était reliée à l'échappement était elle-même à la pression de gavage lorsque le moteur fonctionnait, de sorte que la conduite de pilotage qui y était reliée était déjà mise à la pression de gavage avant le passage du sélecteur 52 de sa deuxième position à sa première position).

Dans l'exemple de la figure 1, la conduite de commande 58 du sélecteur intermédiaire 52 est reliée à la conduite de désactivation 16 de l'organe d'immobilisation. Le sélecteur intermédiaire 52 peut passer de sa première à sa deuxième position lorsque la conduite 58 est alimentée en fluide, ce qui n'est possible que lorsque la conduite de désactivation 16 est elle-même alimentée en fluide, c'est-à-dire lorsque l'organe d'immobilisation est déjà sollicité vers sa position inactive. C'est donc seulement dans cette situation que le sélecteur intermédiaire pourra occuper sa deuxième position pour permettre aux conduites de pilotage 54 et 56 d'être respectivement reliées aux conduites principales 26 et 28. Par conséquent, si les conduites 26 et 28 servent respectivement à l'alimentation et à l'échappement, la conduite de pilotage 54 pourra commander le sélecteur principal vers sa première position active. Dans le cas contraire, ce sera la deuxième conduite de pilotage 56 qui commandera le sélecteur principal vers sa deuxième position active.

De préférence, le ressort 60 et le ressort 20 sont choisis de telle sorte que les efforts exercés par le ressort 60 sur le sélecteur intermédiaire 52 lorsque ce dernier commence à être sollicité de sa première vers sa deuxième position sont au moins égaux aux efforts exercés par le ressort 20 sur l'organe d'immobilisation 18 durant toute la course de ce dernier de sa position active jusqu'à sa position inactive (ces efforts étant maximaux lorsque l'organe d'immobilisation atteint sa position inactive). Pour ce faire, il suffit de déterminer correctement les précontraintes de ces ressorts.

Ainsi, lorsque la pression augmente dans le tronçon 16A de la conduite 16 et dans la conduite de commande 58, elle permet dans un premier temps de déplacer le piston 18 vers sa position inactive puis, en continuant à augmenter, elle autorise ensuite le passage du sélecteur intermédiaire 52 (contre l'effet du ressort 60) dans sa deuxième position et c'est seulement dans cette situation que le sélecteur principal peut venir occuper l'une de ses positions actives.

La conduite de désactivation 16 de l'organe d'immobilisation est raccordée aux deux conduites principales 26 et 28 par un clapet navette 62 également dénommé sélecteur de circuit, dont les entrées sont respectivement reliées à des conduites secondaires 26C et 28C qui prennent en dérivation sur les conduites 26 et 28 par rapport au sélecteur intermédiaire 52 et dont la sortie est raccordée à la conduite de désactivation 16. Ainsi, la conduite 16 est automatiquement raccordée à celle des conduites principales 26 et 28 qui est à la plus haute pression, de sorte que la désactivation de l'organe d'immobilisation utilise la haute pression du circuit.

Selon le type de moteur utilisé, les pressions maximales d'alimentation peuvent atteindre environ 450 bars, en particulier lorsqu'il s'agit d'un moteur "lent", à basse vitesse et à fort couple. Il n'est pas nécessaire d'utiliser une pression aussi élevée pour désactiver l'organe d'immobilisation. Par conséquent, le circuit de la figure 1 comporte des moyens pour limiter la pression dans la conduite de désactivation 16. Ces moyens sont constitués par un réducteur de pression 64 dont le ressort de rappel 66 est taré à des pressions suffisantes pour désactiver l'organe d'immobilisation (contre l'effet du ressort 20) et pour autoriser la sollicitation du sélecteur intermédiaire 52 dans sa deuxième position (contre l'effet du ressort 60) . Ce réducteur 64 est commandé par la pression dans le tronçon 16A de la conduite 16 à l'encontre de l'effort du ressort 66 pour, si la pression dans ce tronçon 16A devient trop élevée, mettre ce dernier en communication avec une conduite d'évacuation 68 reliée au réservoir R.

Comme on l'a indiqué précédemment, les conduites principales sont avantageusement mises à la même pression de gavage à l'arrêt du moteur, comme c'est le cas dans la situation de la figure 1. Il importe toutefois que, malgré l'existence de cette pression de gavage dans les conduites 26 et 28, l'organe d'immobilisation continue d'occuper sa position active à l'arrêt du moteur. Pour ce faire, le circuit comporte un clapet de seuil ou "clapet taré" 70 qui est destiné à ne permettre la circulation de fluide dans la conduite de désactivation 16 dans le sens allant de l'une des conduites principales 26 ou 28 vers la chambre de désactivation du vérin 12 que lorsque la pression dans l'une des conduites principales devient supérieure à une pression de seuil, au moins égale à la pression de gavage. Sur la figure 1, le clapet de seuil 70 est constitué par un clapet à bille rappelé dans le sens de la fermeture par un ressort taré à la pression de seuil, ce clapet étant disposé sur la conduite 16 entre le clapet navette 62 et le réducteur de pression 64.

Une autre solution pour rendre le dispositif d'immobilisation insensible à la pression de gavage consisterait à choisir le ressort de rappel 20 de l'organe d'immobilisation de telle sorte que sa précontrainte soit suffisante pour qu'il résiste à la pression de gavage dans la chambre 14.

Pour permettre le passage de l'organe d'immobilisation 18 de sa position active représentée sur la figure 1 à sa position inactive, il est nécessaire de permettre la vidange de la chambre de désactivation 14. Pour ce faire, une conduite de vidange 72 est prévue, cette conduite étant raccordée à la conduite d'évacuation 68. Le circuit comporte des moyens pour limiter le débit de fluide dans la conduite 72 lors de la vidange de la chambre 14, ces moyens étant par exemple constitués par une restriction 74. Dans l'exemple de la figure 1, la conduite de vidange 72 est raccordée en permanence (au noeud N72) au tronçon 16A de la conduite 16 qui se trouve en aval du réducteur de pression dans le sens de l'alimentation de la conduite de désactivation. Ainsi, lors du fonctionnement du moteur, le fluide prélevé sur la conduite principale qui sert à alimenter la conduite de désactivation passe également dans la conduite de vidange 72. En d'autres termes, le raccordement permanent de la conduite 72 au tronçon 16A de la conduite 16 est la cause d'une fuite permanente lors du fonctionnement du moteur. La présence de la restriction 74 permet de limiter cette fuite, de telle sorte qu'elle n'affecte pas de manière trop sensible le rendement du moteur, qu'elle permet de maintenir dans la chambre de désactivation 14 une pression suffisante pour maintenir l'organe d'immobilisation dans la position inactive et qu'elle permet également d'assurer une pression suffisante dans la conduite 58 pour maintenir le sélecteur 52 dans sa deuxième position.

Outre la conduite de vidange 72, une conduite 76 de retour de fuite du moteur et une conduite 78 de vidange de la chambre qui contient le ressort 20 sont également raccordées à la conduite d'évacuation 68.

Une soupape 82 raccorde la conduite de dérivation 22A à la conduite de pilotage 56. Ainsi, lorsque le moteur fonctionne dans le sens dans lequel la conduite 26 sert à l'alimentation en fluide (le sélecteur 50 étant déplacé vers la gauche sur la figure 1), si la pression devient trop élevée dans la conduite de dérivation 22A (le ressort de la soupape 82 étant taré convenablement), le fluide en excès se déverse dans la conduite de pilotage 56 et peut ainsi piloter le sélecteur 50 dans la position où le fluide en excès dans la conduite 22A peut s'écouler dans la conduite 28. La restriction 96 permet de maintenir une pression suffisante dans la conduite 56 en amont de cette restriction 96 quand le fluide (éventuellement prélevé sur la conduite 22A par la soupape 82) circule dans le sens de la vidange de cette conduite 56.

De la même manière, une soupape 84 est disposée entre la conduite de dérivation 24A et la première conduite de pilotage, le rôle de cette soupape étant analogue à celui de la soupape 82, mais elle fonctionne lorsque c'est la conduite principale 28 qui alimente le moteur. La première conduite de pilotage 54 est équipée d'une restriction 94 analogue à la restriction 96 de la conduite 56

On décrit maintenant la figure 2, sur laquelle les éléments analogues à ceux de la figure 1 ont conservé les mêmes références. Par ailleurs, on n'a représenté sur la figure 2 que les éléments du bloc B.

Les différences entre la figure 2 et la figure 1 concernent tout d'abord le système intermédiaire de sélection. En effet, sur la figure 2, ce système comporte un sélecteur intermédiaire 152 qui est susceptible d'occuper une première position (visible sur la figure 2) dans laquelle les deux conduites de pilotage 154 et 156 sont mises en communication, ainsi qu'une deuxième position dans laquelle elles sont isolées l'une de l'autre et sont respectivement raccordées, la conduite 154 à la première conduite principale 26 et la conduite 156 à la deuxième conduite principale 28.

Plus précisément, sur la figure 2, les conduites de pilotage 154 et 156 sont respectivement raccordées en permanence aux conduites principales 26 et 28 par des noeuds, respectivement N154 et N156. Ces conduites sont munies des ensembles de clapets et de restrictions 54A, 54B, 56A et 56B précédemment décrits. Une boucle de dérivation comprend une première conduite 154' qui relie la première conduite de pilotage 154 à une entrée du sélecteur 152 et une deuxième conduite 156' qui relie la deuxième conduite de pilotage 156 à une autre entrée du sélecteur 152. Ainsi, dans la première position du sélecteur intermédiaire 152, les conduites de la boucle de dérivation 154' et 156' sont mises en communication, de sorte que les pressions dans les tronçons des conduites 154A et 156A des conduites de pilotage 154 et 156 sont égales, ce qui contraint le sélecteur principal 150 à occuper sa position de repos. Les tronçons 154A et 156A se trouvent, dans le sens de l'alimentation des conduites de pilotage, en aval du raccordement des conduites 154' et 156' aux conduites 154 et 156 respectivement, ce raccordement étant lui-même en aval des restrictions 54A et 56A.

De même que sur la figure 1, le sélecteur intermédiaire 152 est en permanence rappelé vers sa première position par un ressort 60. Il est sollicité vers sa deuxième position par le fluide circulant dans la conduite de commande 58 raccordée à la conduite de désactivation 16 du dispositif d'immobilisation 12 comme sur la figure 1. En outre, le réducteur de pression 64 et la conduite de vidange 72 sont analogues à ceux que montre la figure 1. Les ressorts 20 et 60 sont choisis de la même manière que sur la figure 1.

Ainsi, comme pour la figure 1, le circuit comprend des moyens pour limiter la pression dans le tronçon 16A de la conduite de désactivation 16 et cette conduite est susceptible d'être raccordée à l'une ou l'autre des conduites principales 26 et 28 par des moyens de mise en communication sélective. Toutefois, sur la figure 2, le clapet navette 62 est remplacé par un sélecteur 162 à trois positions. Il comporte deux entrées, respectivement raccordées aux conduites 26 et 28 et une sortie raccordée à la conduite 16. Dans sa position intermédiaire de repos représentée sur la figure 2, il isole la conduite 16 de la conduite 26 et de la conduite 28. Ce sélecteur est commandé entre ses trois positions par la pression de fluide dans les conduites 26 et 28, sur lesquelles prennent des conduites de pilotage 26' et 28', et par l'action antagoniste de ressorts de rappel 163 et 165. Ainsi, lorsque les moyens de mise en circulation du fluide dans le circuit sont mis en oeuvre de telle sorte que la conduite 26 sert à l'alimentation en haute pression, tandis que la conduite 28 est mise à l'échappement, le sélecteur 162 est déplacé vers la gauche sur la figure 2 pour occuper sa première position active dans laquelle la conduite 16 est mise en communication avec la conduite principale d'alimentation 26, de sorte que le piston d'immobilisation 18 est sollicité en position inactive.

Dans l'autre sens de fonctionnement du moteur, lorsque la conduite 28 sert à l'alimentation et la conduite 26 à l'échappement, le sélecteur 162 est sollicité vers la droite sur la figure 2, c'est-à-dire qu'il occupe sa deuxième position active dans laquelle la conduite 28 sert à alimenter la conduite 16 pour solliciter l'organe d'immobilisation dans sa position inactive. Les ressorts de rappel 163 et 165 peuvent être tarés de telle sorte que le sélecteur 162 est déplacé, à partir de sa position de repos, vers l'une ou l'autre de ses positions actives seulement lorsque la pression dans celle des conduites 26 et 28 qui est raccordée à la conduite 16 est au moins égale à une pression de seuil supérieure à la pression de gavage. Ainsi, le sélecteur 162 joue également le rôle du clapet de seuil 70 de la figure 1.

Le sélecteur principal 150 est différent du sélecteur 50 de la figure 1 dans la mesure où il intègre les soupapes qui permettent d'éviter les surpressions dans les conduites de dérivation 22A et 24A. Plus précisément, il comporte deux soupapes 182 et 184, respectivement situées entre la conduite 22A et la conduite 23 entre la conduite 24A et la conduite 23.

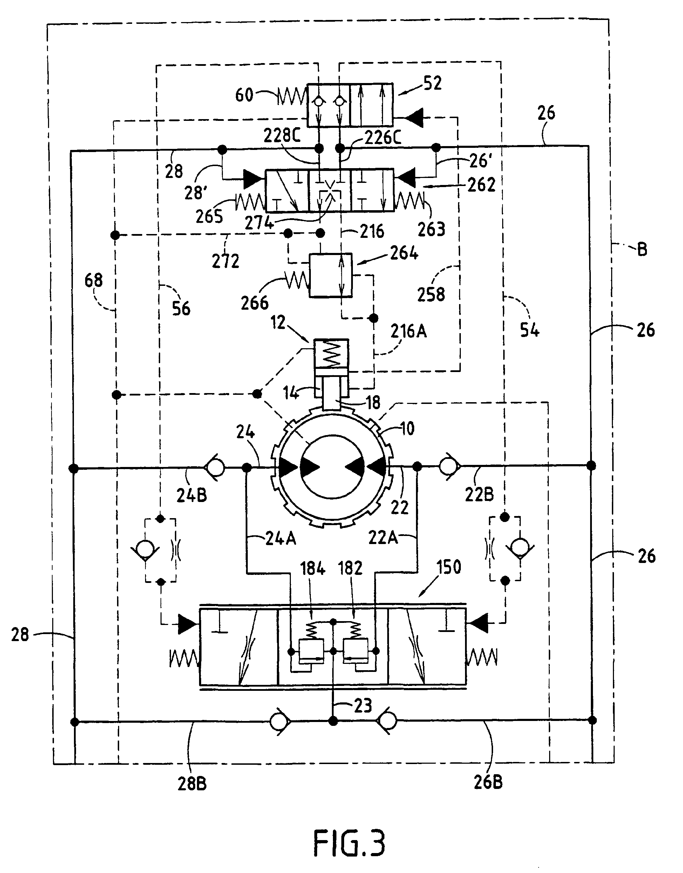

On décrit maintenant la figure 3, sur laquelle on a utilisé les mêmes références que sur la figure 1 pour désigner des éléments analogues sur ces deux figures. Comme sur la figure 2, seul le bloc B est représenté. Sur la figure 3, le sélecteur principal 150 est le même que sur la figure 2 et les soupapes 182 et 184 sont présentes. En revanche, le sélecteur intermédiaire 52 est le même que sur la figure 1 et les conduites de pilotage 54 et 56 sont disposées entre les sélecteurs 52 et 150 de même manière que les conduites 54 et 56 de la figure 1 sont disposées entre les sélecteurs 52 et 50. Sur la figure 3, la conduite de commande 258 qui sert à faire passer le sélecteur intermédiaire 52 de sa première position vers sa deuxième position est raccordée au cylindre du vérin de désactivation 12 de telle sorte qu'elle n'est effectivement mise en communication avec la conduite de désactivation 216 que lorsque l'organe d'immobilisation 18 est éloigné de sa position active d'une distance déterminée. Ainsi, la conduite 258 est raccordée à la chambre de désactivation 14 dans une position telle qu'elle est isolée de cette chambre tant que l'organe d'immobilisation occupe sa position active et il est nécessaire que l'organe d'immobilisation soit déplacé suffisamment vers sa position inactive pour que cette conduite 258 débouche effectivement dans la chambre 14 sans être obstruée et permette ainsi au fluide entrant dans cette chambre par le tronçon 216A de la conduite 216 d'alimenter le sélecteur 52.

Le sélecteur 262 de la figure 3 est capable d'occuper trois positions. Il est raccordé, d'une part, aux conduites principales 26 et 28 par des branches 226C et 228C de ces conduites et, d'autre part, à la conduite de désactivation 216 et à la conduite de vidange 272. Dans sa position intermédiaire de repos représentée sur la figure 3, le sélecteur 262 isole l'une de l'autre les conduites principales 26 et 28 et fait communiquer entre elles les conduites 216 et 272 qu'il isole des conduites 26 et 28.

Par conséquent, dans cette position, la chambre de désactivation 14 n'est pas alimentée par les conduites 26 ou 28, mais elle peut être vidangée par la conduite 216 et la conduite 272. Un réducteur de pression 264 est également placé sur la conduite 216, le tronçon 216A de cette conduite se trouvant en aval de ce réducteur de pression. Lorsque la pression dans le tronçon 216A est inférieure à la pression pour laquelle est taré son ressort de rappel 266, ce réducteur de pression fait communiquer ledit tronçon 216A avec la conduite 272 par l'intermédiaire du sélecteur 262. C'est en particulier la situation à l'arrêt du moteur. En revanche si, lors du fonctionnement du moteur, la pression dans le tronçon 216A de la conduite 216 devient trop élevée, le réducteur de pression 264 peut mettre directement le tronçon 216A et la conduite 272 en communication, indépendamment de la position du sélecteur 262, ce qui permet de limiter la pression dans la chambre 14.

Le sélecteur 262 est commandé entre sa position de repos et l'une ou l'autre de ses positions actives en fonction de la pression dans les conduites 26 et 28, par des conduites de pilotage 26' et 28'. Ainsi, lorsque le fluide circule de telle sorte que les conduites 26 et 28 servent respectivement à l'alimentation et à l'échappement, la haute pression de la conduite 26 sollicite le sélecteur 262 vers la gauche de la figure 3, de telle sorte qu'il occupe sa première position active dans laquelle la conduite 216 est raccordée à la conduite 26, de sorte que la chambre 14 peut être alimentée en fluide, tandis que les conduites 28 et 272 sont isolées l'une de l'autre. Les conduites 216 et 272 sont alors également isolées et peuvent seulement communiquer par l'intermédiaire du réducteur de pression 264. Lorsque c'est la conduite 28 qui sert à l'alimentation, le sélecteur 262 est déplacé vers la droite sur la figure 3 pour occuper sa deuxième position active dans laquelle la conduite 28 est raccordée à la conduite 216 pour alimenter la chambre 14, tandis que les conduites 26 et 272 sont isolées. De même, les conduites 216 et 272 peuvent alors seulement communiquer par l'intermédiaire du réducteur de pression 264.

On comprend que, à partir de la position de repos de la figure 3, lorsque la pression augmente dans l'une des conduites principales 26 et 28, le sélecteur 262 est déplacé vers l'une ou l'autre de ses deux positions actives pour alimenter la conduite de désactivation 216. Ensuite, compte tenu du raccordement particulier de la conduite 258 représenté à titre de variante sur la figure 3, cette conduite ne pourra être alimentée en fluide que lorsque l'organe d'immobilisation 218 sera suffisamment déplacé vers sa position inactive (c'est-à-dire lorsque les lamelles de frein auront cessé d'être en contact les unes contre les autres ou lorsque les deux parties du crabot se seront désengagées). Alors, le sélecteur intermédiaire 52 pourra être déplacé vers sa deuxième position, en raccordant respectivement les conduites de pilotage 54 et 56 aux conduites principales 26 et 28 pour commander le déplacement du sélecteur principal 150 vers l'une ou l'autre de ses deux positions actives et permettre l'échappement de fluide hors du moteur par celle des conduites de dérivation 22A et 24A qui est raccordée à la conduite principale qui a la plus basse pression.

Il faut ici souligner que le sélecteur 262 constitue un moyen pour ne permettre la vidange de la chambre de désactivation 14 par la conduite de vidange 272 que lorsque la conduite de désactivation 216 est isolée des conduites principale 26 et 28. Ainsi, contrairement au circuit des figures 1 et 2, le circuit de la figure 3 permet d'éviter que la nécessité de pouvoir vidanger la chambre de désactivation ne soit la cause de fuites permanentes. En effet, c'est seulement lorsque le sélecteur 262 occupe sa position intermédiaire que la conduite 216 est durablement raccordée à la conduite 272. C'est donc seulement dans ce cas que la vidange de la chambre 14 sera possible. Lors du fonctionnement du moteur, le réducteur de pression 264 pourra éventuellement permettre tout de même un raccordement momentané de la chambre 14 à la conduite 272, alors même que la conduite 216 est raccordée à l'une des conduites 26 et 28, mais ce raccordement momentané servira seulement à limiter la pression dans la chambre 14, sans permettre la vidange de cette dernière, l'organe d'immobilisation 18 continuant alors d'occuper sa position active.

Le sélecteur à trois positions 262 constitue donc une valve de sélection de vidange qui, lorsque les pressions de fluide dans les conduites principales 26 et 28 sont sensiblement égales, occupe sa position de repos ou position de vidange dans laquelle la conduite de désactivation 216 est raccordée à la conduite de vidange 272 et isolée des conduites principales 26 et 28. Les première et deuxième positions de fonctionnement de cette valve 262 ont déjà été décrites. Si le réducteur de pression 264 était absent, la conduite 216 serait totalement isolée des conduites 26 et 28 dans les deux positions de fonctionnement de la valve 262. Comme on l'a indiqué précédemment, du fait de la présence possible de ce réducteur de pression 264, la conduite 216 reste isolée des conduites 26 et 28 tant que la pression dans le tronçon 216A de la conduite 216 reste inférieure à une pression maximale prédéterminée.

Sur la figure 3, le circuit comporte également des moyens pour limiter le débit de fluide circulant dans la conduite de vidange 272. Dans l'exemple représenté, ces moyens sont constitués par une restriction 274 qui est disposée sur la branche de la valve 262 qui sert à mettre en communication les conduites 216 et 272 en position de vidange de cette valve. Par ailleurs, les ressorts 263 et 265 de rappel de la valve à l'encontre de, respectivement, l'alimentation par la conduite 28 et l'alimentation par la conduite 26, peuvent être tarés, de telle sorte qu'ils ne permettent effectivement le déplacement de cette valve vers l'une ou l'autre de ses positions de fonctionnement à partir de sa position de vidange que lorsque la pression dans celle des conduites 26 et 28 qui est raccordée à l'alimentation est au moins égale à une pression donnée. Ainsi, la valve de sélection de vidange 262 de la figure 3 comprend les moyens de mise en communication sélective de la conduite de désactivation 216 avec l'une ou l'autre des conduites 26 et 28, le clapet de seuil, et les moyens pour limiter le débit de fluide circulant dans la conduite de vidange 272.

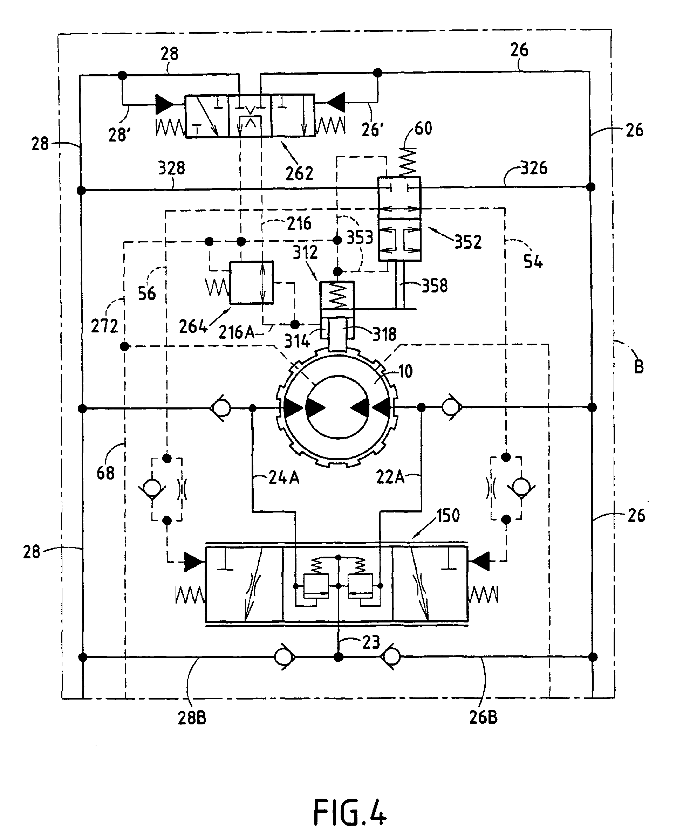

On décrit maintenant la figure 4, sur laquelle les éléments analogues à ceux de la figure 1 sont affectés des mêmes références que sur cette figure. Le sélecteur principal 150 est le même que ceux des figures 2 et 3. La valve de vidange 262 est analogue à celle de la figure 3. En effet, selon la position qu'elle adopte, elle sert à raccorder la conduite de désactivation 216 à la conduite de vidange 272 en isolant ces deux conduites des conduites 26 et 28, ou bien à raccorder la conduite 216 à celle des conduites 26 et 28 qui est à la plus haute pression pour alimenter la chambre de désactivation 314 du dispositif de désactivation 312. Les différences entre le circuit de la figure 4 et ceux des figures précédentes résident principalement dans la conformation du sélecteur secondaire 352 du circuit de la figure 4 et dans le mode de commande du déplacement de ce dernier entre ses deux positions.

La figure 4 montre le sélecteur secondaire 352 dans sa première position, dans laquelle, comme c'était le cas pour le sélecteur 152 de la figure 2, les deux conduites de pilotage 54 et 56 sont mises en communication. Les conduites principales 26 et 28 sont également raccordées à l'entrée du sélecteur 352 par des branches 326 et 328. Dans sa première position, le sélecteur 352 isole ces deux branches l'une de l'autre, de même qu'il isole les conduites de pilotage 54 et 56 de ces deux conduites principales 26 et 28.

En revanche, lorsque le sélecteur secondaire 352 occupe sa deuxième position, il raccorde la première conduite de pilotage 54 à la première conduite principale 26 par la branche 326 et la deuxième conduite de pilotage 56 à la deuxième conduite principale 28 par la branche 328. Ainsi, contrairement à la variante de la figure 2, les deux conduites de pilotage 54 et 56 ne sont pas raccordées en permanence respectivement aux conduites 26 et 28, mais seulement lorsque le sélecteur intermédiaire occupe sa deuxième position.

Sur la figure 4, le système intermédiaire de sélection n'est pas commandé hydrauliquement mais mécaniquement. Ainsi, les moyens de commande de ce système intermédiaire comprennent au moins un organe de commande qui est lié mécaniquement à l'organe d'immobilisation 318 et qui est susceptible d'être actionné par cet organe d'immobilisation pour solliciter le système intermédiaire de sélection de sa première configuration vers sa deuxième configuration. En espèce, les moyens de commande du sélecteur intermédiaire 352 comprennent une tige de commande 358 qui est liée à l'organe d'immobilisation 318. Ainsi, lorsque ce dernier passe de sa position active représentée sur la figure 4 à sa position inactive permettant le fonctionnement du moteur, il sollicite la tige 358 qui place le sélecteur 352 dans sa deuxième position.

En revanche, lorsque la chambre de désactivation 314 est vidangée par la conduite 272 et que l'organe d'immobilisation revient dans sa position active, il sollicite la tige 358 qui, éventuellement aidée par le ressort de rappel permanent 60, commande le sélecteur 352 dans sa première position. Des conduites 353 de retour de fuite du sélecteur 352 sont raccordées à l'évacuation 68.

Lorsque, à partir de la situation représentée sur la figure 4, la pression augmente dans l'une des conduites principales 26 ou 28 (celle qui est raccordée à l'alimentation), la valve 262 est commandée (conduites de pilotage 26' et 28') vers l'une de ses positions de fonctionnement, ce qui permet le raccordement de la conduite de désactivation 216 avec la conduite 26 ou 28 à la haute pression et l'alimentation en fluide de la chambre 314, de sorte que l'organe d'immobilisation 318 se déplace vers sa position inactive. De ce fait, le sélecteur 352 vient occuper sa deuxième position et raccorde respectivement les conduites 54 et 56 aux conduites 26 et 28. La conduite de pilotage reliée à la conduite principale à la haute pression sollicite alors le sélecteur 150 vers sa première ou sa deuxième position active et le moteur peut fonctionner normalement, l'échappement se faisant par.celle des conduites 22A et 24A qui est reliée à la conduite 23.

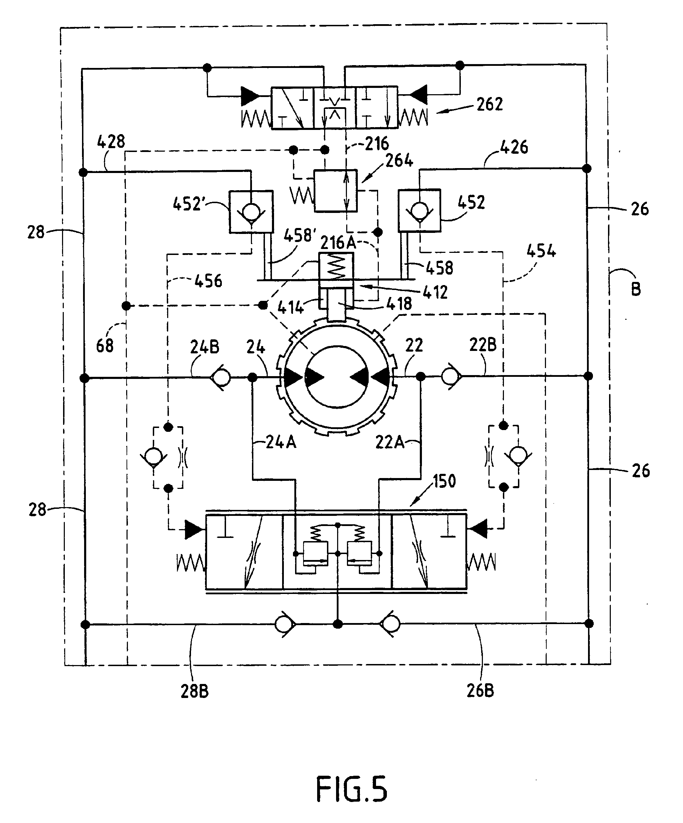

On décrit maintenant la figure 5, sur laquelle les éléments inchangés par rapport à la figure 1 conservent les mêmes références. Le sélecteur principal 150 est analogue à celui des figures 2 à 4. Cette fois, le système intermédiaire de sélection est réalisé différemment puisqu'il comporte un premier clapet 452 et un deuxième clapet 452' respectivement disposés entre la première conduite principale 26 (par la branche 426 de cette dernière) et la première conduite de pilotage 454 et entre la deuxième conduite principale 28 (par la branche 428 de cette dernière) et la deuxième conduite de pilotage 456. Ainsi, les conduites de pilotage 454 et 456 ne sont pas directement reliées entre elles. Les clapets 452 et 452', lorsqu'ils ne sont pas soumis à l'action des moyens de commande que l'on décrira par la suite, c'est-à-dire lorsqu'ils occupent leurs premières positions, permettent seulement la circulation de fluide dans le sens allant des conduites de pilotage vers les conduites principales respectives, en coupant la circulation de fluide des conduites principales vers les conduites de pilotage. En revanche, lorsqu'ils sont commandés pour occuper leurs deuxièmes positions, les clapets 452 et 452' autorisent la circulation de fluide dans les deux sens entre, pour le clapet 452, les conduites 26 et 454 et, pour le clapet 452', les conduites 28 et 456.

Dans l'exemple représenté sur la figure 5, les moyens de commande du déplacement des clapets 452 et 452' vers leurs deuxièmes positions sont mécaniques. Ils comprennent en effet deux tiges de commande, respectivement 458 et 458' qui sont mécaniquement liées à l'organe d'immobilisation 418 du dispositif d'immobilisation 412.

La valve de sélection de vidange 262 est analogue à celle des figures 3 et 4. De même, la conduite de désactivation 216 est raccordée de la même manière que sur les figures 3 et 4 et le réducteur de pression 264 est analogue à ceux des figures 3 et 4.

Lorsque, à partir de la position de la figure 4, la pression augmente dans celle des conduites 26 ou 28 qui est raccordée à l'alimentation, la chambre 414 de désactivation du dispositif de désactivation 412 est alimentée en fluide par le tronçon 216A de la conduite 216, de sorte que l'organe d'immobilisation 418 est déplacé vers sa position inactive et sollicite alors les clapets 452 et 452' simultanément vers leurs deuxièmes positions grâce aux tiges de commande 458 et 458'. Bien entendu, des moyens de commande hydrauliques des clapets pourraient également être prévus. Ce déplacement permet à celle des conduites 26 et 28 qui est à la haute pression d'alimenter en fluide la conduite de pilotage 454 ou 456 à laquelle elle est raccordée pour commander ainsi le déplacement du sélecteur 150 vers l'une ou l'autre de ses deux positions actives et permettre l'échappement par la conduite 22A ou 24A.

On a vu qu'au cours du fonctionnement du moteur, pour éviter les phénomènes de cavitation, la conduite d'échappement est raccordée à la pompe de gavage. Par conséquent, lorsque l'on arrête le moteur, les pressions dans les deux conduites principales se stabilisent à la pression de gavage. Les clapets 452 et 452' venant occuper leurs premières positions sous l'effet du déplacement de l'organe d'immobilisation 418 vers sa position active, celle des conduites de pilotage qui était raccordée à la conduite principale d'échappement reste à la pression de gavage, tandis que l'autre conduite de pilotage (qui était raccordée à la conduite principale d'alimentation) voit sa pression baisser jusqu'à atteindre la pression de gavage puisque le fluide peut circuler de cette conduite de pilotage vers la conduite principale à laquelle elle est raccordée. Ainsi, le sélecteur 150 vient automatiquement se replacer vers sa position de repos à l'arrêt du moteur.

Le comportement du circuit des figures 1 et 3 lors d'un arrêt des moteurs est analogue, puisque, dans la première position du sélecteur 52, la circulation de fluide est seulement possible dans le sens allant des conduites de pilotage vers les conduites principales auxquelles elles sont raccordées respectivement. Sur les figures 2 et 4, l'arrêt du moteur et donc le passage de l'organe d'immobilisation vers sa position inactive sollicitent le sélecteur 152 ou 352 de telle sorte qu'il fasse communiquer directement les conduites de pilotage 54 et 56 ou 154 et 156, ce qui place rapidement le sélecteur principal 150 dans sa position intermédiaire de repos.

Sur les figures, les sélecteurs 50 ou 150 peuvent occuper un nombre infini de positions intermédiaires de passage correspondant à des degrés variables d'étranglement de l'écoulement. On voit toutefois sur les figures que des restrictions 51 et 51' sont ménagées sur les conduits internes du sélecteur 50 ou 150 qui servent à mettre en communication l'une ou l'autre des conduites 22A et 24A avec l'échappement. Ainsi, le sélecteur 50 ou 150 inclut des moyens pour limiter le débit de fluide circulant dans la deuxième conduite principale lorsque ce sélecteur occupe sa première position active (la deuxième conduite principale est alors raccordée à l'échappement) et pour limiter le débit de fluide circulant dans la première conduite principale lorsque le sélecteur occupe sa deuxième position active (la première conduite principale est alors raccordée à l'échappement). Ainsi, le débit de fluide à travers le sélecteur 50 ou 150 est continûment variable jusqu'à un débit maximal prédéfini. Du fait de la présence de ces limiteurs de débit, le sélecteur principal joue également le rôle de limiteur de vitesse pour le moteur.

## Revendications

1. Circuit de fluide hydraulique comprenant :
- un moteur hydraulique (10) à deux sens de rotation, comportant un stator et un rotor, notamment du type utilisé pour entraîner les organes de déplacement en translation d'un engin, ledit moteur ayant deux orifices principaux (22, 24) respectivement destinés à servir à l'alimentation et à l'échappement de fluide,
- un dispositif (12 ; 312 ; 412) d'immobilisation du rotor du moteur qui comprend au moins un organe d'immobilisation (18 ; 318 ; 418) et des moyens (14, 16, 20 ; 216) pour solliciter ledit organe dans une position active dans laquelle le rotor est immobilisé et dans une position inactive dans laquelle le rotor est libre de tourner par rapport au stator,
- des moyens de mise en circulation de fluide hydraulique (P, R),
- deux conduites principales (26, 28), respectivement destinées à être reliées à chacun des deux orifices principaux du moteur pour servir de conduites d'alimentation et d'échappement pour le moteur en situation de fonctionnement de ce dernier,
- un dispositif de sélection de la circulation du fluide entre les orifices principaux du moteur (22, 24) et les conduites principales (26, 28) auxquelles ils sont respectivement raccordés, ce dispositif comprenant un sélecteur principal (50, 150) susceptible d'occuper une position de repos dans laquelle, les pressions de fluide dans les conduites principales (26, 28) étant sensiblement égales, la circulation de fluide entre les conduites principales et les orifices principaux correspondants (22, 24) est empêchée dans le sens de l'échappement, une première position active dans laquelle, la pression de fluide dans la première conduite principale étant supérieure (26) à la pression de fluide dans la deuxième conduite principale (28), la circulation de fluide entre la première conduite principale (26) et le premier orifice principal (22) est autorisée dans le sens de l'alimentation tandis que la circulation de fluide entre la deuxième conduite principale (28) et le deuxième orifice principal (24) est autorisée dans le sens de l'échappement et une deuxième position active dans laquelle, la pression de fluide dans la première conduite principale (26) étant inférieure à la pression de fluide dans la deuxième conduite principale (28), la circulation de fluide entre la première conduite principale (26) et le premier orifice principal (22) est autorisée dans le sens de l'échappement tandis que la circulation de fluide entre la deuxième conduite principale (28) et le deuxième orifice principal (24) est autorisée dans le sens de l'alimentation, le dispositif de sélection comprenant, en outre, des moyens pour commander le déplacement du sélecteur principal entre ses trois positions,
**caractérisé en ce que** les moyens pour commander le déplacement du sélecteur principal (50 ; 150) comprennent un système intermédiaire de sélection (52 ; 152 ; 352 ; 452, 452') susceptible d'adopter une première configuration dans laquelle le sélecteur principal est maintenu dans sa position de repos et une deuxième configuration dans laquelle le sélecteur principal (50 ; 150) est autorisé à quitter sa position de repos pour adopter l'une ou l'autre de ses positions actives, ainsi que deux conduites de pilotage (54, 56 ; 154, 156 ; 454, 456) susceptibles d'être mises à la même pression ou à des pressions différentes par l'intermédiaire du système intermédiaire de sélection (52 ; 152 ; 352 ; 452, 452'), les moyens pour commander le déplacement du sélecteur principal comportant, en outre, des moyens de commande (58, 60 ; 258 ; 358 ; 458, 458') du système intermédiaire de sélection qui sont raccordés au dispositif d'immobilisation de telle sorte que ledit système intermédiaire de sélection n'est autorisé à passer de sa première à sa deuxième configuration qu'une fois que l'organe d'immobilisation a été sollicité vers sa position inactive.

2. Circuit selon la revendication 1, **caractérisé en ce que** le système intermédiaire de sélection comporte un sélecteur intermédiaire (52) susceptible d'occuper une première position dans laquelle la circulation de fluide dans les conduites de pilotage (54, 56) est coupée, au moins dans le sens de l'alimentation en fluide desdites conduites, ainsi qu'une deuxième position dans laquelle la première et la deuxième conduite de pilotage (54, 56) sont respectivement raccordées aux première et deuxième conduites principales (26, 28), les première et deuxième configuration du système intermédiaire de sélection étant respectivement obtenues lorsque le sélecteur intermédiaire occupe respectivement ses première et deuxième positions.

3. Circuit selon la revendication 1, **caractérisé en ce que** le système intermédiaire de sélection comporte un sélecteur intermédiaire (152, 352) susceptible d'occuper une première position dans laquelle les deux conduites de pilotage (154, 156 ; 54, 56) sont mises en communication ainsi qu'une deuxième position dans laquelle la première et la deuxième conduite de pilotage sont isolées l'une de l'autre et sont respectivement raccordées aux première et deuxième conduites principales (26, 28), les première et deuxième configuration du système intermédiaire de sélection étant respectivement obtenues lorsque le sélecteur intermédiaire occupe respectivement ses première et deuxième positions.

4. Circuit selon la revendication 3, **caractérisé en ce que**, dans sa première position, le sélecteur intermédiaire (352) isole les deux conduites de pilotage (54, 56) des conduites principales (26, 28).

5. Circuit selon l'une quelconque des revendications 2 à 4, **caractérisé en ce que** le sélecteur intermédiaire (52 ; 152 ; 352) est sollicité vers sa première position par des premiers moyens de rappel élastique permanent (60).

6. Circuit selon la revendication 5, dans lequel l'organe d'immobilisation (18 ; 318) est sollicité vers sa position active par des deuxièmes moyens de rappel élastique permanent (20) et en ce que lesdits premiers et deuxièmes moyens de rappel élastique permanent sont choisis de telle sorte que les contraintes exercées par les premiers moyens de rappel élastique permanent (60) sur le sélecteur intermédiaire (52 ; 152 ; 352) lorsque ce dernier commence à être sollicité de sa première vers sa deuxième position sont au moins égales aux contraintes exercées par les deuxièmes moyens de rappel élastique permanent (20) sur l'organe d'immobilisation durant toute la course de ce dernier de sa position active jusqu'à sa position inactive.

7. Circuit selon la revendication 1, **caractérisé en ce que** le système intermédiaire de sélection comporte un premier et un deuxième clapet (452, 452'), respectivement disposés entre la première conduite principale (26) et la première conduite de pilotage (454), et entre la deuxième conduite principale (28) et la deuxième conduite de pilotage (456), chacun de ces clapets étant susceptible d'adopter une première position dans laquelle il coupe la circulation de fluide de la première conduite principale (26) vers la première conduite de pilotage (454), respectivement de la deuxième conduite principale (28) vers la deuxième conduite de pilotage (456), et une deuxième position dans laquelle il autorise la circulation de fluide dans les deux sens entre la première conduite principale et la première conduite de pilotage, respectivement entre la deuxième conduite principale et la deuxième conduite de pilotage, la première configuration du système intermédiaire de sélection étant obtenue lorsque les deux clapets occupent leurs premières positions, tandis que la deuxième configuration dudit système est obtenue lorsque les deux clapets occupent leurs deuxièmes positions.

8. Circuit selon l'une quelconque des revendications 1 à 7, **caractérisé en ce que** les moyens de commande du système intermédiaire de sélection comprennent au moins une conduite de commande (58 ; 258) susceptible d'être alimentée en fluide pour solliciter le système intermédiaire de sélection (52 ; 152) de sa première configuration dans sa deuxième configuration.

9. Circuit selon la revendication 8, dans lequel les moyens pour solliciter l'organe d'immobilisation (18) dans sa position inactive comprennent un vérin de désactivation (12) susceptible d'être alimenté en fluide par une conduite de désactivation (16 ; 216), **caractérisé en ce que** la conduite de commande (58 ; 258) est susceptible d'être alimentée en fluide par la conduite de désactivation (16, 216).

10. Circuit selon la revendication 9, **caractérisé en ce que** la conduite de commande (258) est raccordée au cylindre du vérin de désactivation (12) de telle sorte que ladite conduite de commande (258) n'est effectivement mise en communication avec la conduite de désactivation (216) que lorsque l'organe d'immobilisation (18) est éloigné de sa position active d'une distance déterminée.

11. Circuit selon l'une quelconque des revendications 1 à 7, **caractérisé en ce que** les moyens de commande du système intermédiaire de sélection (352 ; 452, 452') comprennent au moins un organe de commande (358 ; 458, 458'), lié mécaniquement à l'organe d'immobilisation et susceptible d'être actionné par ledit organe d'immobilisation (318 ; 418) pour solliciter le système intermédiaire de sélection de sa première configuration dans sa deuxième configuration.

12. Circuit selon l'une quelconque des revendications 1 à 11, dans lequel les moyens pour solliciter l'organe d'immobilisation (18) dans sa position inactive comprennent un vérin de désactivation (12) susceptible d'être alimenté en fluide par une conduite de désactivation (16), **caractérisé en ce qu'**il comporte des moyens (64 ; 264) pour limiter la pression dans conduite de désactivation (16 ; 216) et **en ce que** ladite conduite de désactivation est susceptible d'être raccordée à l'une ou l'autre des conduites principales (26, 28) par des moyens (62 ; 162 ; 262) de mise en communication sélective tels qu'un clapet navette.

13. Circuit selon l'une quelconque des revendications 1 à 11, dans lequel les moyens pour solliciter l'organe d'immobilisation (18) dans sa position inactive comprennent un vérin de désactivation (12) susceptible d'être alimenté en fluide par une conduite de désactivation (16) et dans lequel, à l'arrêt du moteur, les conduites principales (26, 28) sont susceptibles d'être mises à la même pression, dite "pression de gavage", **caractérisé en ce qu'**il comporte un clapet de seuil (70 ; 162 ; 262) qui est destiné à ne permettre la circulation de fluide dans la conduite de désactivation (16 ; 216) dans le sens allant de l'une des conduites principales (26, 28) vers la chambre de désactivation (14) que lorsque la pression dans l'une des conduites principales devient supérieure à une pression de seuil, au moins égale à la pression de gavage.

14. Circuit selon l'une quelconque des revendications 1 à 13, dans lequel les moyens pour solliciter l'organe d'immobilisation (18 ; 318 ; 418) dans sa position inactive comprennent un vérin de désactivation (12 ; 312 ; 412) ayant une chambre de désactivation (14 ; 314 ; 414) susceptible d'être alimentée en fluide par une conduite de désactivation (16 ; 216), **caractérisé en ce qu'**il comporte une conduite de vidange (72, 272) de la chambre de désactivation et des moyens (74, 274) pour limiter le débit de fluide dans ladite conduite lors de la vidange de ladite chambre.

15. Circuit selon l'une quelconque des revendications 1 à 14, dans lequel les moyens pour solliciter l'organe d'immobilisation (18 ; 318 ; 418) dans sa position inactive comprennent un vérin de désactivation (12 ; 312 ; 412) ayant une chambre de désactivation (14 ; 314 ; 414) susceptible d'être alimentée en fluide par une conduite de désactivation (216), **caractérisé en ce qu'**il comporte une conduite de vidange (272) de la chambre de désactivation (14) et des moyens (262) pour ne permettre la vidange de la chambre de désactivation par cette conduite que lorsque la conduite de désactivation est isolée des conduites principales.

16. Circuit selon la revendication 15, **caractérisé en ce qu'**il comporte une valve de sélection de vidange (262) susceptible d'occuper une position de vidange dans laquelle, les pressions de fluide dans les conduites principales (26, 28) étant sensiblement égales, la conduite de désactivation (216) est raccordée à la conduite de vidange (272) et est isolée des conduites principales (26, 28), une première position de fonctionnement dans laquelle, la pression dans la première conduite principale (26) étant supérieure à la pression dans la deuxième conduite principale (28), la conduite de désactivation (216) est raccordée à la première conduite principale (26) et reste isolée de la conduite de vidange (272) et de la deuxième conduite principale (28), ainsi qu'une deuxième position de fonctionnement dans laquelle, la pression dans la première conduite principale (26) étant inférieure à la pression dans la deuxième conduite principale (28), la conduite de désactivation (216) est raccordée à la deuxième conduite principale (28) et reste isolée de la conduite de vidange (272) et de la première conduite principale (26).

17. Circuit selon la revendication 16, **caractérisé en ce qu'**il comporte un réducteur de pression (264) destiné, dans les première et deuxième position de la valve de sélection de vidange (262), à permettre un raccordement de la chambre de désactivation (14) à la conduite de vidange (272) lorsque la pression dans ladite chambre (14) atteint une pression donnée dite "pression maximale de désactivation".

18. Circuit selon l'une quelconque des revendications 15 à 17, **caractérisé en ce qu'**il comporte des moyens (274) pour limiter le débit de fluide circulant dans la conduite de vidange (272).

19. Circuit selon les revendications 12, 13, 16 et 18, **caractérisé en ce que** la valve de sélection de vidange (262) comprend les moyens de mise en communication sélective, le clapet de seuil et les moyens pour limiter le débit de fluide circulant dans la conduite de vidange (272).

20. Circuit selon l'une quelconque des revendications 1 à 19, **caractérisé en ce que** le sélecteur principal (50, 150) inclut des moyens (51, 51') pour limiter le débit de fluide circulant dans la deuxième conduite principale (28) lorsque ledit sélecteur occupe sa première position active et pour limiter le débit de fluide circulant dans la première conduite principale (26) lorsque ce sélecteur occupe sa deuxième position active.

## Claims

1. Hydraulic fluid circuit comprising:
- a hydraulic motor (10) with two directions of rotation, comprising a stator and a rotor, in particular of the type used for driving the members for displacing a machine in translation, said motor having two principal ports (22, 24) respectively intended to serve for supply and exhaust of fluid,
- a device (12; 312; 412) for immobilization of the rotor of the motor which comprises at least one immobilization member (18; 318; 418) and means (14, 16, 20; 216) for urging said member into an active position in which the rotor is immobilized and into an inactive position in which the rotor is free to rotate with respect to the stator,
- hydraulic fluid circulation means (P, R),
- two principal conduits (26, 28), respectively intended to be connected to each of the two principal ports of the motor to serve as supply and exhaust conduits for the motor when the latter is in operation,
- a device for selecting the circulation of the fluid between the principal ports of the motor (22, 24) and the principal conduits (26, 28) to which they are respectively connected, this device comprising a principal selector (50, 150) capable of occupying a rest position in which, the fluid pressures in the principal conduits (26, 28) being substantially equal, the circulation of fluid between the principal conduits and the corresponding principal ports (22, 24), is prevented in the sense of exhaust; a first active position in which, the fluid pressure in the first principal conduit (26) being greater than the fluid pressure in the second principal conduit (28), the circulation of fluid between the first principal conduit (26) and the first principal port (22) is allowed in the sense of supply while the circulation of fluid between the second principal conduit (28) and the second principal port (24) is allowed in the sense of exhaust; and a second active position in which, the fluid pressure in the first principal conduit (26) being less than the fluid pressure in the second principal conduit (28), the circulation of fluid between the first principal conduit (26) and the first principal port (22) is allowed in the sense of exhaust while the circulation of fluid between the second principal conduit (28) and the second principal port (24) is allowed in the sense of supply, the selection device further comprising means for controlling the displacement of the principal selector between its three positions,
**characterised in that** the means for controlling displacement of the principal selector (50; 150) comprise an intermediate system of selection (52; 152; 352; 452, 452') capable of adopting a first configuration in which the principal selector is maintained in its position of rest and a second configuration in which the principal selector (50; 150) is allowed to leave its position of rest to adopt one or the other of its active positions, as well as two pilot conduits (54, 56; 154, 156; 454, 456) capable of being taken to the same pressure or to different pressures via the intermediate system of selection (52; 152; 352; 452, 452'), the means for controlling the displacement of the principal selector further comprising means (58, 60; 258; 358; 458, 458') for controlling the intermediate system of selection which are connected to the immobilization device so that said intermediate system of selection is allowed to pass from its first to its second configuration only once the immobilization member has been urged towards its inactive position.

2. The circuit according to claim 1, **characterised in that** the intermediate system of selection comprises an intermediate selector (52) capable of occupying a first position in which the circulation of fluid in the pilot conduits (54, 56) is cut off, at least in the sense of supply of said conduits with fluid, and a second position in which the first and the second pilot conduits (54, 56) are respectively connected to the first and second principal conduits (26, 28), the first and second configurations of the intermediate system of selection being respectively obtained when the intermediate selector occupies its first and second positions respectively.

3. The circuit according to claim 1, **characterised in that** the intermediate system of selection comprises an intermediate selector (152, 352) capable of occupying a first position in which the two pilot conduits (154, 156; 54, 56) are placed in communication and a second position in which the first and the second pilot conduits are isolated from each other and are respectively connected to the first and second principal conduits (26, 28), the first and second configurations of the intermediate system of selection being respectively obtained when the intermediate selector occupies its first and second positions respectively.

4. The circuit according to claim 3, **characterised in that**, in its first position, the intermediate selector (352) isolates the two pilot conduits (54, 56) from the principal conduits (26, 28).

5. The circuit according to any one of claims 2 to 4, **characterised in that** the intermediate selector (52; 152; 352) is urged towards its first position by first permanent elastic return means (60).

6. The circuit according to claim 5, in which the immobilization member (18; 318) is urged towards its active position by second permanent elastic return means (20) and in that said first and second permanent elastic return means are chosen so that the stresses exerted by the first permanent elastic return means (60) on the intermediate selector (52; 152; 352) when the latter begins to be urged from its first towards its second position, are at least equal to the stresses exerted by the second permanent elastic return means (20) on the immobilization member during the whole stroke of the latter from its active position to its inactive position.

7. The circuit according to claim 1, **characterised in that** the intermediate system of selection comprises a first and a second flap valve (452, 452'), respectively disposed between the first principal conduit (26) and the first pilot conduit (454) and between the second principal conduit (28) and the second pilot conduit (456), each of these valves being capable of adopting a first position in which it cuts off the circulation of fluid from the first principal conduit (26) towards the first pilot conduit (454), and from the second principal conduit (28) towards the second pilot conduit (456), respectively, and a second position in which it allows the circulation of fluid in the two directions between the first principal conduit and the first pilot conduit, and between the second principal conduit and the second pilot conduit, respectively, the first configuration of the intermediate system of selection being obtained when the two valves occupy their first positions, while the second configuration of said system is obtained when the two valves occupy their second positions.

8. The circuit according to any one of claims 1 to 7, **characterised in that** the means for controlling the intermediate system of selection comprise at least one control conduit (58; 258) capable of being supplied with fluid in order to urge the intermediate system of selection (52; 152) from its first configuration into its second configuration.

9. The circuit according to claim 8, in which the means (18) for urging the immobilization member into its inactive position comprise a de-activation jack (12) capable of being supplied with fluid by a de-activation conduit (16; 216), **characterised in that** the control conduit (58; 258) is capable of being supplied with fluid via the de-activation conduit (16; 216).

10. The circuit according to claim 9, **characterised in that** the control conduit (258) is connected to the cylinder of the de-activation jack (12) so that said control conduit (258) is effectively placed in communication with the de-activation conduit (216) only when the immobilization member (18) is remote from its active position by a determined distance.

11. The circuit according to any one of claims 1 to 7, **characterised in that** the means for controlling the intermediate system of selection (352; 452, 452') comprise at least one control member (258; 458, 458'), mechanically connected to the immobilization member and capable of being actuated by said immobilization member (318; 418) in order to urge the intermediate system of selection from its first configuration into its second configuration.

12. The circuit according to any one of claims 1 to 11, in which the means for urging the immobilization member (18) into its inactive position comprise a de-activation jack (12) capable of being supplied with fluid by a de-activation conduit (16), **characterised in that** it comprises means (64; 264) for limiting the pressure in the de-activation conduit (16; 216) and **in that** said de-activation conduit is capable of being connected to one or the other of the principal conduits (26, 28) by selective communication means (62; 162; 262) such as a shuttle valve.

13. The circuit according to any one of claims 1 to 11, in which the means for urging the immobilization member (18) into its inactive position comprise a de-activation jack (12) capable of being supplied with fluid by a de-activation conduit (16) and in which, when the motor is stopped, the principal conduits (26, 28) are capable of being put at the same, so-called "booster" pressure, **characterised in that** it comprises a threshold valve (70; 162; 262) which is intended to allow the circulation of fluid in the de-activation conduit (16; 216) in the direction going from one of the principal conduits (26, 28) towards the de-activation chamber (14), only when the pressure in one of the principal conduits becomes greater than a threshold pressure, at least equal to the booster pressure.

14. The circuit according to any one of claims 1 to 13, in which the means for urging the immobilization member (18; 318; 418) into its inactive position comprise a de-activation jack (12; 312; 412) having a de-activation chamber (14; 314; 414) capable of being supplied with fluid by a de-activation conduit (16; 216), **characterised in that** it comprises a conduit (72, 272) for draining the de-activation chamber and means (74, 274) for limiting the flowrate of fluid in said conduit during draining of said chamber.

15. The circuit according to any one of claims 1 to 14, in which the means for urging the immobilization member (18; 318; 418) into its inactive position comprise a de-activation jack (12; 312; 412) having a de-activation chamber (14; 314; 414) capable of being supplied with fluid by a de-activation conduit (216), **characterised in that** it comprises a conduit (272) for draining the de-activation chamber (14) and means (262) for allowing draining of the de-activation chamber by this conduit only when the de-activation conduit is isolated from the principal conduits.

16. The circuit according to claim 15, **characterised in that** it comprises a drain selection valve (262) capable of occupying a draining position in which, the fluid pressures in the principal conduits (26, 28) being substantially equal, the de-activation conduit (216) is connected to the draining conduit (272) and is isolated from the principal conduits (26, 28), a first operational position in which, the pressure in the first principal conduit (26) being greater than the pressure in the second principal conduit (28), the de-activation conduit (216) is connected to the first principal conduit (26) and remains isolated from the draining conduit (272) and from the second principal conduit (28), and a second operational position in which, the pressure in the first principal conduit (26) being lower than the pressure in the second principal conduit (28), the de-activation conduit (216) is connected to the second principal conduit (28) and remains isolated from the draining conduit (272) and from the first principal conduit (26).

17. The circuit according to claim 16, **characterised in that** it comprises a pressure reducer (264) intended, in the first and second positions of the drainage selection valve (262), to allow a connection of the de-activation chamber (14) to the draining conduit (272) when the pressure in said chamber (14) attains a given, so-called "maximum de-activation" pressure.

18. The circuit according to any one of claims 15 to 17, **characterised in that** it comprises means (274) for limiting the flowrate of fluid circulating in the draining conduit (272).

19. The circuit according to claims 12, 13, 16 and 18, **characterised in that** the drain selection valve (262) comprises the means for selective communication, the threshold valve and the means for limiting the flowrate of fluid circulating in the draining conduit (272).

20. The circuit according to any one of claims 1 to 19, **characterised in that** the principal selector (50, 150) includes means (51, 51') for limiting the flowrate of fluid circulating in the second principal conduit (28) when said selector occupies its first active position and for limiting the flowrate of fluid circulating in the first principal conduit (26) when this selector occupies its second active position.

## Patentansprüche

1. Hydraulikfluidkreis umfassend:
- einen Hydraulikmotor (10) mit zwei Drehrichtungen, der einen Stator und einen Rotor umfaßt, vor allem vom Typ dessen, der für den Antrieb der Organe zur Verschiebebewegung eines Fahrzeugs verwendet wird, wobei der Motor zwei Hauptöffnungen (22, 24) aufweist, die dazu bestimmt sind, zur Fluidzufuhr bzw. zur Fluidabfuhr zu dienen,
- eine Vorrichtung (12; 312; 412) zum Feststellen des Rotors des Motors, die wenigstens ein Feststellorgan (18; 318; 418) sowie Mittel (14, 16, 20; 216) umfaßt, um das genannte Organ in eine aktive Position, in welcher der Rotor festgelegt ist, und in eine inaktive Position, in welcher der Rotor gegenüber dem Stator frei drehen kann, zu belasten,
- Mittel, um Hydraulikfluid (P, R) in Zirkulation zu versetzen,
- zwei Hauptleitungen (26, 28), die jeweils dazu bestimmt sind, mit einer der zwei Hauptöffnungen des Motors verbunden zu werden, um in der Betriebssituation des Motors für diesen als Zufuhr- und als Abfuhrleitung zu dienen,
- eine Vorrichtung zur Wahl der Zirkulation des Fluids zwischen den Hauptöffnungen (22, 24) des Motors und den Hauptleitungen (26, 28), mit denen sie jeweils verbunden sind, wobei diese Vorrichtung eine Hauptauswahlvorrichtung (50, 150) umfaßt, die geeignet ist, eine Ruhestellung, in der - da die Fluiddrücke in den Hauptleitungen (26, 28) im wesentlichen gleich sind - die Fluidzirkulation zwischen den Hauptleitungen und den entsprechenden Hauptöffnungen (22, 24) in Richtung der Abfuhr verhindert wird, eine erste aktive Position, in welcher - da der Fluiddruck in der ersten Hauptleitung (26) größer als der Fluiddruck in der zweiten Hauptleitung (28) ist - die Fluidzirkulation zwischen der ersten Hauptleitung (26) und der ersten Hauptöffnung (22) in Richtung der Zufuhr zugelassen wird, während die Fluidzirkulation zwischen der zweiten Hauptleitung (28) und der zweiten Hauptöffnung (24) in Richtung der Abfuhr zugelassen wird, sowie eine zweite aktive Position einzunehmen, in der - da der Fluiddruck in der ersten Hauptleitung (26) geringer als der Fluiddruck in der zweiten Hauptleitung (28) ist - die Fluidzirkulation zwischen der ersten Hauptleitung (26) und der ersten Hauptöffnung (22) in Richtung der Abfuhr zugelassen wird, während die Fluidzirkulation zwischen der zweiten Hauptleitung (28) und der zweiten Hauptöffnung (24) in Richtung der Zufuhr zugelassen wird, wobei die Auswahlvorrichtung ferner Mittel umfaßt, um die Bewegung der Hauptauswahlvorrichtung zwischen ihren drei Positionen zu steuern,
**dadurch gekennzeichnet, daß** die Mittel zur Steuerung der Bewegung der Hauptauswahlvorrichtung (50; 150) ein Zwischenauswahlsystem (52; 152; 352; 452, 452'), das geeignet ist, eine erste Ausbildung, in der die Hauptauswahlvorrichtung in ihrer Ruhestellung gehalten wird, und eine zweite Ausbildung anzunehmen, in welcher die Hauptauswahlvorrichtung (50; 150) berechtigt ist, ihre Ruhestellung zu verlassen, um die eine oder die andere ihrer aktiven Positionen einzunehmen, sowie zwei Steuerleitungen (54, 56; 154, 156; 454, 456) umfassen, die geeignet sind, mittels des Zwischenauswahlsystems (52; 152; 352; 452, 452') auf den gleichen Druck oder auf unterschiedliche Drücke gebracht zu werden, wobei die Mittel zur Steuerung der Bewegung der Hauptauswahlvorrichtung ferner Mittel zur Steuerung (58, 60; 258; 358; 458, 458') des Zwischenauswahlsystems umfassen, die an die Feststellvorrichtung derart angeschlossen sind, daß das Zwischenauswahlsystem erst dann berechtigt ist, von seiner ersten in seine zweite Ausbildung überzugehen, wenn das Feststellorgan in seine inaktive Position belastet worden ist.

2. Kreis nach Anspruch 1, **dadurch gekennzeichnet, daß** das Zwischenauswahlsystem eine Zwischenauswahlvorrichtung (52) umfaßt, die geeignet ist, eine erste Position, in der die Fluidzirkulation in den Steuerleitungen (54, 56) - wenigstens in Richtung der Fluidzufuhr der genannten Leitungen - unterbrochen ist, sowie eine zweite Position einzunehmen, in der die erste und die zweite Steuerleitung (54, 56) mit der ersten bzw. mit der zweiten Hauptleitung (26, 28) verbunden sind, wobei die erste und die zweite Ausbildung des Zwischenauswahlsystems dann erhalten werden, wenn die Zwischenauswahlvorrichtung ihre erste bzw. ihre zweite Position einnimmt.

3. Kreis nach Anspruch 1, **dadurch gekennzeichnet, daß** das Zwischenauswahlsystem eine Zwischenauswahlvorrichtung (152, 352) umfaßt, die geeignet ist, eine erste Position, in welcher die zwei Steuerleitungen (154, 156; 54, 56) miteinander verbunden sind, sowie eine zweite Position einzunehmen, in der die erste und die zweite Steuerleitung voneinander isoliert und mit der ersten bzw. mit der zweiten Hauptleitung (26, 28) verbunden sind, wobei die erste und die zweite Ausbildung des Zwischenauswahlsystems dann erhalten werden, wenn die Zwischenauswahlvorrichtung ihre erste bzw. ihre zweite Position einnimmt.

4. Kreis nach Anspruch 3, **dadurch gekennzeichnet, daß** die Zwischenauswahlvorrichtung (352) in ihrer ersten Position die zwei Steuerleitungen (54, 56) von den Hauptleitungen (26, 28) isoliert.

5. Kreis nach irgendeinem der Ansprüche 2 bis 4, **dadurch gekennzeichnet, daß** die Zwischenauswahlvorrichtung (52; 152; 352) durch erste Mittel zur permanenten elastischen Rückstellung (60) in ihre erste Position belastet wird.

6. Kreis nach Anspruch 5, bei dem das Feststellorgan (18; 318) durch zweite Mittel zur permanenten elastischen Rückstellung (20) in seine aktive Position belastet wird und bei dem die ersten und die zweiten Mittel zur permanenten elastischen Rückstellung derart gewählt werden, daß die Kräfte, die durch die ersten Mittel zur permanenten elastischen Rückstellung (60) auf die Zwischenauswahlvorrichtung (52; 152; 352) ausgeübt werden, wenn damit begonnen wird, letztere von ihrer ersten in ihre zweite Position zu belasten, wenigstens gleich den Kräften sind, die durch die zweiten Mittel zur permanenten elastischen Rückstellung (20) auf das Feststellorgan während dessen gesamten Weges von seiner aktiven Position bis zu seiner inaktiven Position ausgeübt werden.

7. Kreis nach Anspruch 1, **dadurch gekennzeichnet, daß** das Zwischenauswahlsystem ein erstes und ein zweites Ventil (452, 452') umfaßt, die zwischen der ersten Hauptleitung (26) und der ersten Steuerleitung (454) bzw. zwischen der zweiten Hauptleitung (28) und der zweiten Steuerleitung (456) angeordnet sind, wobei ein jedes dieser Ventile geeignet ist, eine erste Position, in der es die Fluidzirkulation von der ersten Hauptleitung (26) zur ersten Steuerleitung (454) bzw. von der zweiten Hauptleitung (28) zur zweiten Steuerleitung (456) unterbricht, sowie eine zweite Position einzunehmen, in welcher es die Fluidzirkulation in beiden Richtungen zwischen der ersten Hauptleitung und der ersten Steuerleitung bzw. zwischen der zweiten Hauptleitung und der zweiten Steuerleitung zuläßt, wobei die erste Ausbildung des Zwischenauswahlsystems dann erhalten wird, wenn die zwei Ventile ihre ersten Positionen einnehmen, während die zweite Ausbildung des genanten Systems erhalten wird, wenn die zwei Ventile ihre zweiten Positionen einnehmen.

8. Kreis nach irgendeinem der Ansprüche 1 bis 7, **dadurch gekennzeichnet, daß** die Mittel zur Steuerung des Zwischenauswahlsystems wenigstens eine Steuerleitung (58; 258) umfassen, die geeignet ist, mit Fluid versorgt zu werden, um das Zwischenauswahlsystem (52; 152) von seiner ersten Ausbildung in seine zweite Ausbildung zu belasten.

9. Kreis nach Anspruch 8, bei dem die Mittel zum Belasten des Feststellorgans (18) in seine inaktive Position einen Deaktivierungszylinder (12) umfassen, der geeignet ist, über eine Deaktivierungsleitung (16; 216) mit Fluid versorgt zu werden, **dadurch gekennzeichnet, daß** die Steuerleitung (58; 258) geeignet ist, über die Deaktivierungsleitung (16, 216) mit Fluid versorgt zu werden.

10. Kreis nach Anspruch 9, **dadurch gekennzeichnet, daß** die Steuerleitung (258) mit dem Zylinder des Deaktivierungszylinders (12) derart verbunden ist, daß die Steuerleitung (258) erst dann mit der Deaktivierungsleitung (216) wirkungsvoll verbunden ist, wenn das Feststellorgan (18) um einen bestimmten Abstand von seiner aktiven Position entfernt ist.

11. Kreis nach irgendeinem der Ansprüche 1 bis 7, **dadurch gekennzeichnet, daß** die Mittel zur Steuerung des Zwischenauswahlsystems (352; 452, 452') wenigstens ein Steuerorgan (358; 458, 458') umfassen, das mit dem Feststellorgan mechanisch verbunden und geeignet ist, durch das Feststellorgan (318; 418) betätigt zu werden, um das Zwischenauswahlsystem von seiner ersten Ausbildung in seine zweite Ausbildung zu belasten.

12. Kreis nach irgendeinem der Ansprüche 1 bis 11, bei dem die Mittel zum Belasten des Feststellorgans (18) in seine inaktive Position einen Deaktivierungszylinder (12) umfassen, der geeignet ist, über eine Deaktivierungsleitung (16) mit Fluid versorgt zu werden, **dadurch gekennzeichnet, daß** er Mittel (64; 264) umfaßt, um den Druck in der Deaktivierungsleitung (16; 216) zu begrenzen, und daß die Deaktivierungsleitung geeignet ist, über Mittel (62; 162; 262) zum selektiven Verbinden, wie ein Wechselventil, mit der einen oder der anderen der Hauptleitungen (26, 28) verbunden zu werden.

13. Kreis nach irgendeinem der Ansprüche 1 bis 11, bei dem die Mittel zum Belasten des Feststellorgans (18) in seine inaktive Position einen Deaktivierungszylinder (12) umfassen, der geeignet ist, über eine Deaktivierungsleitung (16) mit Fluid versorgt zu werden, und bei dem, bei Stillstand des Motors, die Hauptleitungen (26, 28) geeignet sind, auf den gleichen Druck, den sogenannten "Versorgungsdruck" gebracht zu werden, **dadurch gekennzeichnet, daß** er ein Schwellenventil (70; 162; 262) umfaßt, welches dazu bestimmt ist, die Fluidzirkulation in der Deaktivierungsleitung (16; 216) in der von einer der Hauptleitungen (26, 28) zur Deaktivierungskammer (14) verlaufenden Richtung erst dann zuzulassen, wenn der Druck in der einen der Hauptleitungen größer als ein Schwellendruck wird, wenigstens gleich dem Versorgungsdruck ist.

14. Kreis nach irgendeinem der Ansprüche 1 bis 13, bei dem die Mittel zum Belasten des Feststellorgans (18; 318; 418) in seine inaktive Position einen Deaktivierungszylinder (12; 312; 412) umfassen, welcher eine Deaktivierungskammer (14; 314; 414) hat, die geeignet ist, über eine Deaktivierungsleitung (16; 216) mit Fluid versorgt zu werden, **dadurch gekennzeichnet, daß** er eine Leitung (72, 272) zum Entleeren der Deaktivierungskammer sowie Mittel (74, 274) zum Begrenzen des Fluiddurchsatzes in der Leitung während des Entleerens der Kammer umfaßt.

15. Kreis nach irgendeinem der Ansprüche 1 bis 14, bei dem die Mittel zum Belasten des Feststellorgans (18; 318; 418) in seine inaktive Position einen Deaktivierungszylinder (12; 312; 412) umfassen, der eine Deaktivierungskammer (14; 314; 414) hat, welche geeignet ist, über eine Deaktivierungsleitung (216) mit Fluid versorgt zu werden, **dadurch gekennzeichnet, daß** er eine Leitung (272) zum Entleeren der Deaktivierungskammer (14) sowie Mittel (262) umfaßt, um das Entleeren der Deaktivierungskammer über diese Leitung erst dann zuzulassen, wenn die Deaktivierungsleitung von den Hauptleitungen isoliert ist.

16. Kreis nach Anspruch 15, **dadurch gekennzeichnet, daß** er ein Entleerungsauswahlventil (262) umfaßt, das geeignet ist, eine Entleerungsposition, in der - da die Fluiddrücke in den Hauptleitungen (26, 28) im wesentlichen gleich sind - die Deaktivierungsleitung (216) mit der Entleerungsleitung (272) verbunden und von den Hauptleitungen (26, 28) isoliert ist, eine erste Betriebsstellung, in welcher - da der Druck in der ersten Hauptleitung (26) größer als der Druck in der zweiten Hauptleitung (28) ist - die Deaktivierungsleitung (216) mit der ersten Hauptleitung (26) verbunden ist und von der Entleerungsleitung (272) und von der zweiten Hauptleitung (28) isoliert bleibt, sowie eine zweite Betriebsstellung einzunehmen, in der - da der Druck in der ersten Hauptleitung (26) geringer als der Druck in der zweiten Hauptleitung (28) ist - die Deaktivierungsleitung (216) mit der zweiten Hauptleitung (28) verbunden ist und von der Entleerungsleitung (272) und von der ersten Hauptleitung (26) isoliert bleibt.

17. Kreis nach Anspruch 16, **dadurch gekennzeichnet, daß** er einen Druckminderer (264) umfaßt, welcher dazu bestimmt ist, in der ersten und der zweiten Position des Entleerungsauswahlventils (262) ein Verbinden der Deaktivierungskammer (14) mit der Entleerungsleitung (272) zu ermöglichen, wenn der Druck in der genannten Kammer (14) einen gegebenen Druck, den sogenannten "maximalen Deaktivierungsdruck" erreicht.

18. Kreis nach irgendeinem der Ansprüche 15 bis 17, **dadurch gekennzeichnet, daß** er Mittel (274) zum Begrenzen der in der Entleerungsleitung (272) zirkulierenden Fluidmenge umfaßt.

19. Kreis nach den Ansprüchen 12, 13, 16 und 18, **dadurch gekennzeichnet, daß** das Entleerungsauswahlventil (262) die Mittel zum selektiven Verbinden, das Schwellenventil sowie die Mittel zum Begrenzen der in der Entleerungsleitung (272) zirkulierenden Fluidmenge umfaßt.

20. Kreis nach irgendeinem der Ansprüche 1 bis 19, **dadurch gekennzeichnet, daß** die Hauptauswahlvorrichtung (50, 150) Mittel (51, 51') einschließt, um die in der zweiten Hauptleitung (28) zirkulierende Fluidmenge zu begrenzen, wenn die Auswahlvorrichtung ihre erste aktive Position einnimmt, und um die in der ersten Hauptleitung (26) zirkulierende Fluidmenge zu begrenzen, wenn diese Auswahlvorrichtung ihre zweite aktive Position einnimmt.
